# EUROPÄISCHE PATENTANMELDUNG

(11) **EP 4 618 346 A1**
(43) Veröffentlichungstag der Anmeldung: **17.09.2025**
(21) Anmeldenummer: 24163910.3
(22) Anmeldetag: 15.03.2024
(51) Int. Cl.: H02H 9/04

(54) **ENTSTÖRMODUL IN EINEM LEITUNGSNETZ**

(71) Anmelder: Murrelektronik GmbH, 71570 Oppenweiler (DE)
(72) Erfinder: Rödiger, Jonny, 04442 Zwenkau (DE); Wolff, Ingo, 74613 Öhringen (DE)
(74) Vertreter: Wasmuth, Rolf

(57) **Zusammenfassung**

Die Erfindung betrifft ein Entstörmodul in einem Leitungsnetz, umfassend ein Entstörelement (21) und eine Anzeige (A) für einen Ausfall des Entstörelements (21), wobei das Entstörelement (21) parallel zu einem Verbraucher (V1, V2, V3) in zumindest einer Phase (L1, L2, L3) des Leitungsnetzes angeordnet ist. Das Entstörelement (21) ist ausgebildet zur Gewährleistung der elektromagnetischen Verträglichkeit bei Schaltvorgängen des Verbrauchers (V1, V2, V3), insbesondere bei Schaltvorgängen von Schaltgeräten, Ventilen, Motoren oder dgl. Baueinheiten. Nach der Erfindung ist eine Signaleinheit (10) vorgesehen, die ausgebildet ist, bei einem anhaltenden Spannungsabfall an einem Bauteil des Entstörmoduls (20) die Anzeige (A) zu aktivieren und den Ausfall des Entstörelements (21) anzuzeigen.

## Beschreibung

Die Erfindung betrifft ein Entstörmodul in einem Leitungsnetz, welches als AC-Leitungsnetz oder auch DC-Leitungsnetz ausgebildet sein kann.

Das Entstörmodul umfasst ein Entstörelement und eine Anzeige für einen Ausfall des Entstörelements. Das Entstörelement ist parallel zu einem Verbraucher in zumindest einer Phase des Leitungsnetzes angeordnet. Das Entstörelement ist ausgebildet zur Gewährleistung der elektromagnetischen Verträglichkeit bei Schaltvorgängen oder im Betrieb des Verbrauchers. Als Verbraucher sind insbesondere Schaltgeräte, Ventile, Motoren oder dergleichen Baueinheiten genannt. Insbesondere werden über das Entstörelement Spannungsspitzen abgebaut.

Ein Entstörmodul wird genutzt, um im Betrieb eines Verbrauchers zu gewährleisten, dass andere Geräte nicht durch im Betrieb auftretende elektromagnetische Störfelder beeinflusst werden. Insbesondere sind auftretende Überspannungen durch das Entstörmodul zu löschen, damit eine Beeinflussung anderer Geräte vermieden ist. Das Entstörmodul wird nur in kritischen Betriebszuständen des Verbrauchers aktiv; der Ausfall eines Entstörmoduls kann nicht direkt, sondern nur durch die fehlende Entstörfunktion erkannt werden. Dieses wiederum ist oft schwierig zu erkennen. Zu den typischen Störungen zählen sporadische Fehlfunktionen oder zerstörte Komponenten.

Der Erfindung liegt die Aufgabe zugrunde, einen Ausfall des Entstörmoduls in einem Leitungsnetz zu erkennen und anzuzeigen.

Diese Aufgabe wird durch eine Signaleinheit gelöst, die ausgebildet ist, in Abhängigkeit einer anhaltenden Spannungsänderung an dem Entstörelement des Entstörmoduls eine Anzeige zu aktivieren und so den Ausfall des Entstörelements anzuzeigen. Ein gestörtes bzw. defektes Entstörelement hat gegenüber einem intakten Entstörelement einen abweichenden Ruhestrom oder einen abweichenden Spannungsabfall im Betrieb der Schaltung. Diese Zustandsänderung, insbesondere ein feststellbarer Spannungsabfall, wird durch die Erfindung genutzt. Ein defektes oder gestörtes Entstörelement bewirkt einen anderen Spannungsabfall, insbesondere anderer Größe, als der bei einem intakten Entstörelement auftretenden Spannungsabfall. Dieser Spannungsabfall kann eine Absolutwert Änderung oder eine relative Spannungsänderung sein. Vorteilhaft wird die Signaleinheit die Anzeige aktivieren, wenn die abfallende Spannung einen vorgegebenen Grenzwert überschreitet und/oder über eine vorgegebene Zeitspanne anliegt.

Die Zeitspanne ist regelmäßig größer als 0ms. Vorteilhaft ist die größer als 2 ms bis 50 ms. In einer bevorzugten Ausführungsform kann die Zeitspanne größer als 5 ms bis 30 ms sein, insbesondere größer als 10 ms bis 25 ms. Die Zeitspanne kann ganz insbesondere 20 ms sein.

In einem dreiphasige 400V AC-Leitungsnetz tritt im Störfall ein Spannungsabfall von etwa 346V auf. Der Grenzwert, ab dem ein defektes Störmodul angezeigt wird, liegt in einem Bereich von 5V bis 120V, vorzugsweise in einem Bereich von 10V bis 80V, insbesondere in einem Bereich von 15V bis 30V.

In einer einfachen Ausgestaltung der Erfindung ist vorgesehen, dass das Entstörmodul ein Entstörelement und einen Widerstand umfasst. Die Signaleinheit ist ausgebildet, die insbesondere über den Widerstand abfallende Spannung auszuwerten und in Abhängigkeit der Größe oder der Dauer des Spannungsabfalls am Widerstand die Signaleinheit zu aktivieren.

In besonderer Ausgestaltung der Erfindung ist die Anordnung mehrerer Entstörmodule in einem dreiphasigen Leitungsnetz, insbesondere AC-Leitungsnetz vorgesehen. Vorzugsweise liegt in jeder Phase des Leitungsnetzes ein Entstörelement, wobei die Entstörelemente auf einer Anschlussseite in einem ersten Sternpunkt zusammengeführt sind. Aus dem Leitungsnetz wird ein zweiter Sternpunkt abgeleitet, wobei die Signaleinheit ausgebildet ist, das Potenzial des ersten Sternpunktes und das Potenzial des zweiten Sternpunktes miteinander zu vergleichen. Bei voneinander abweichenden Potenzialen der Sternpunkte aktiviert die Signaleinheit eine Anzeige. Der zweite Sternpunkt ist insbesondere in der Signaleinheit ausgebildet, in der Knotenpunkte der einzelnen Phasen in der Signaleinheit zu einem gemeinsamen Sternpunkt zusammengeführt sind. Wird aufgrund eines Ausfalls eines Entstörmoduls das im Normalbetrieb symmetrische Netz unsymmetrisch, ergeben sich an den Sternpunkten unterschiedliche Potenziale. Dieser bei Ausfall eines Entstörmoduls auftretende Potenzialunterschied wird genutzt, um die Anzeige zu aktivieren.

In einer einfachen Ausbildung der Erfindung, sind die Sternpunkte elektrisch über eine LED miteinander verbunden. Bei einem Potenzialunterschied zwischen den Sternpunkten wird die LED angesteuert und leuchtet. Damit in beiden Richtungen eines Potenzialunterschiedes die LED aufleuchtet, ist eine in beiden Richtungen eines Stromflusses durchlässige LED angeordnet.

Vorteilhaft ist mindestens ein Entstörelement einer Phase, vorzugsweise zwei Entstörelemente, besonders bevorzugt jedes Entstörelement einer Phase jeweils in Reihe mit einer Sicherung geschaltet. Die Sicherung ist ausgebildet, bei einer Überspannung und einem daraus resultierenden Strom den zum Verbraucher parallelen Leitungszweig zu unterbrechen. Durch die Unterbrechung des Leitungszweiges ändert sich das Potenzial zumindest eines Sternpunktes, was von der Signaleinheit ausgewertet wird. Die Signaleinheit aktiviert eine Anzeige um den Ausfall eines der angeordneten Entstörelemente anzuzeigen.

In einfacher Ausgestaltung der Erfindung wird der erste Sternpunkt jeweils vor der Reihenschaltung aus Entstörelement und Sicherung abgeleitet und der zweite Sternpunkt jeweils nach der Reihenschaltung aus Entstörelement und Sicherung abgeleitet.

Es kann auch vorteilhaft sein, den ersten Sternpunkt zwischen dem Entstörelement und der Sicherung abzuleiten und den zweiten Sternpunkt nach der Reihenschaltung aus Entstörelement und Sicherung abzuleiten.

Das Entstörelement ist vorteilhaft aus einem Varistor gebildet. Im Normalbetrieb ist der Widerstand des Varistors sehr groß, während bei einer Überspannung der Widerstand des Varistors fast verzögerungsfrei sehr klein wird und die Ladung ableitet. Ist in Reihe mit dem Varistor eine Sicherung geschaltet, wird diese bei Ableitung der Ladung ansprechen und den Leitungszweig des Entstörelements unterbrechen.

In einer anderen Ausbildung der Erfindung kann das Entstörelement aus einem RC-Glied gebildet sein. Im normalen Betrieb hat das RC-Glied je nach Auslegung einen hohen Widerstand. Tritt eine Überspannung auf, wird die Ladung über den Kondensator abgeleitet.

Besteht das Entstörelement aus einem RC -Glied, kann der erste Sternpunkt vor dem RC-Glied abgeleitet werden und der zweite Sternpunkt nach dem RC-Glied abgeleitet werden.

Die Signaleinheit steuert eine Anzeige an, die akustisch und/oder optisch und/oder als Meldekotakt ausgeführt sein kann. In einem Ausführungsbeispiel der Erfindung ist die Signaleinheit eine optische Signaleinheit in Form einer LED.

Die in der Signaleinheit verbauten Widerstände zur Ausbildung eines Sternpunktes können als komplexe Widerstände vorgesehen sein. Der komplexe Widerstand kann aus einer Kombination aus zumindest einem ohmschen Anteil und/oder zumindest einem kapazitiven Anteil und/oder zumindest einem induktiven Anteil ausgebildet sein.

Das Entstörmodul, umfassend ein Entstörelement und eine Anzeige für einen Ausfall des Entstörelements, ist insbesondere in einem AC-Leitungsnetz (Wechselspannungsnetz) verbaut. Es kann auch vorteilhaft sein, das Entstörmodul in einem DC-Leitungsnetz (Gleichspannungsnetz) einzusetzen. Das Leitungsnetz kann ein AC-Leitungsnetz als auch ein DC-Leitungsnetz sein.

Die Merkmale der Erfindung ergeben sich aus den Ansprüchen, der Beschreibung und den Zeichnungen. Die in den Ansprüchen, der Beschreibung und den Zeichnungen offenbarten Merkmale können zur Beschreibung der Erfindung untereinander beliebig kombiniert werden.

Die Zeichnungen zeigen:
- Fig. 1: ein schematisches Schaltbild eines parallel zu einem Verbraucher geschalteten Entstörmoduls mit einem Varistor und einer Signaleinheit,
- Fig. 2: ein schematisches Schaltbild entsprechend Fig. 1 mit einem RC-Glied als Entstörelement,
- Fig. 3: ein schematisches Schaltbild eines dreiphasigen Leitungsnetzes mit in jeder Phase angeordneten Entstörmodulen aus einem Varistor und einer den Potenzialunterschied von Sternpunkten auszuwertenden gemeinsamen Signaleinheit,
- Fig. 4: ein schematisches Schaltbild nach Fig. 3 mit alternativer Ausbildung von Sternpunkten zur Auswertung eines Potenzialunterschiedes durch eine gemeinsame Signaleinheit,
- Fig. 5: ein schematisches Schaltbild nach Fig. 3 mit in jeder Phase angeordneten Entstörelementen aus RC-Gliedern und einer den Potenzialunterschied von Sternpunkten auswertenden gemeinsamen Signaleinheit.

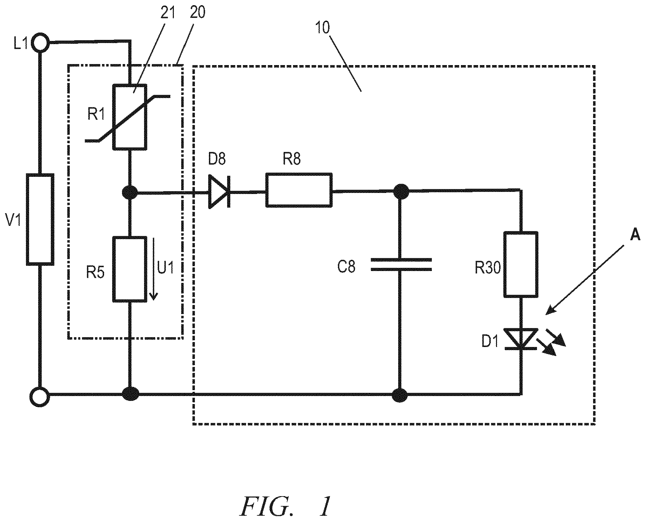

In Fig. 1 ist ein an eine Phase L1 eines Leitungsnetzes angeschlossener Verbraucher V1 dargestellt. Das Leitungsnetz kann ein AC-Leitungsnetz oder DC-Leitungsnetz sein. Elektrisch parallel zum Verbraucher V1 liegt ein Entstörmodul 20, welches im gezeigten Ausführungsbeispiel aus einer Reihenschaltung aus einem Varistor R1 als Entstörelement 21 und einem Widerstand R5 besteht. Die am Widerstand R5 im Störfall abfallende Spannung U1 wird über eine Diode D8 und einen Widerstand R8 einem Kondensator C8 aufgeschaltet. Parallel zum Kondensator C8 liegt eine LED D1, die als optische Anzeige A eines Ausfalls des Entstörmoduls 20 ausgebildet ist. In Reihe zur LED D1 liegt ein Vorwiderstand R30.

Im Normalbetrieb - also bei intakten Bauteilen - ist die am Widerstand R5 abfallende U1 gering oder "Null", da der Varistor R1 hochohmig ist. Die LED D1 leuchtet nicht auf. Tritt eine Überspannung auf, wird der Varistor R1 leitend, sodass ein Stromfluss auftritt und damit eine Spannung U1 am Widerstand R5 abfällt. Das Ansprechen des Entstörelements auf eine Überspannung ist nur kurzzeitig, wobei das RC-Glied aus dem Widerstand R8 und dem Kondensator C8 in diesem Fall dafür sorgt, dass die LED nicht aufleuchtet.

Die Signaleinheit 10 wird die Anzeige A dann aktivieren, wenn der Spannungsabfall einen vorgegebenen Grenzwert überschreitet und/oder der Spannungsabfall für eine vorgegebene Zeitspanne anhält. Die durch das RC-Glied vorgegebene Zeitspanne ist größer 0 ms, vorteilhaft größer als 2 ms bis 50 ms, vorzugsweise größer als 5 ms bis 30 ms, insbesondere 10 ms bis 25 ms, ganz insbesondere 20 ms.

Der Spannungsabfall an einem defekten Entstörmodul liegt in einem dreiphasige 400V AC-Leitungsnetz bei etwa 346V auf.

Der Grenzwert, bei dessen Überschreiten ein defektes Störmodul angezeigt wird, liegt in einem Bereich von 5V bis 120V, vorzugsweise in einem Bereich von 10V bis 80V, insbesondere in einem Bereich von 15V bis 30V.

Wurde die Überspannung ordnungsgemäß abgeleitet und ist der Varistor R1 weiterhin funktionsfähig, weist dieser wieder einen hohen Widerstand auf, sodass am Widerstand R5 keine oder nur eine unwesentliche Spannung abfällt. Ist hingegen der Varistor R1 defekt und lässt auch im normalen Betriebszustand einen Stromfluss zu, wird am Widerstand R5 eine bleibende Spannung U1 abfallen und die Signaleinheit 10 entsprechend aktiviert. Das RC-Glied aus dem Widerstand R8 und dem Kondensator C8 kann ein Aufleuchten der LED nicht mehr verhindern. Die LED D1 leuchtet auf. Der Ausfall des Varistors R1 wird bleibend angezeigt.

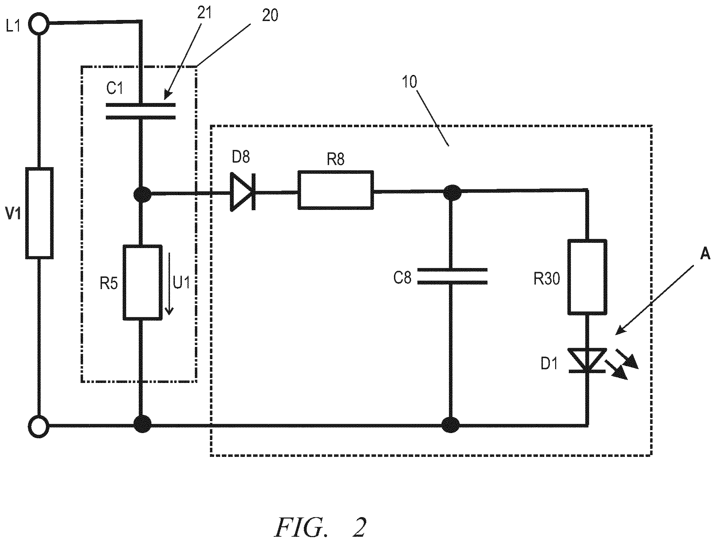

Das in Fig. 2 gezeigte schematische Schaltbild entspricht im Wesentlichen dem nach Fig. 1, weshalb für gleiche Bauteile gleiche Bezugszeichen verwendet sind. Anstelle eines Varistors ist in Fig. 2 als Entstörelement 21 ein RC-Glied aus einem Kondensator C1 und einem in Reihe dazu liegenden Widerstand R5 vorgesehen. Das RC-Glied liegt parallel zum Verbraucher V1.

Die Funktion und Arbeitsweise des Entstörmoduls 20 mit einem RC-Glied entspricht im Prinzip dem eines Varistors nach Fig. 1. Während ein Varistor auf einen Absolutwert einer Spannung anspricht, löscht ein RC-Glied schnelle Transienten. Die am Widerstand R5 abfallende Spannung U1 wird über die Diode D8 gleichgerichtet und an den Kondensator C8 angelegt. Die Kondensatorspannung dient über einen Vorwiderstand R30 der Aktivierung der Anzeige A, die als LED D1 ausgebildet ist.

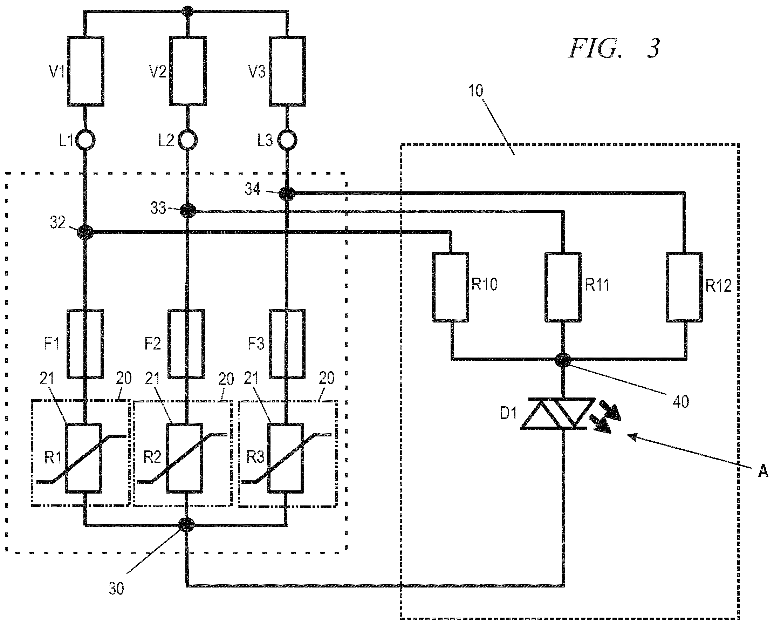

Fig. 3 zeigt das schematische Schaltbild von Verbrauchern V1, V2 und V3 an einem dreiphasigen Leitungsnetz L1, L2 und L3, insbesondere an einem dreiphasigen AC-Leitungsnetz. Im gezeigten Ausführungsbeispiel sind die Verbraucher V1, V2 und V3 in einer Sternschaltung geschaltet. Alternativ können die Verbraucher auch in einer Dreieckschaltung angeschlossen sein.

Die an jeweils einer Phase L1, L2 und L3 liegenden Entstörelemente 21 der Entstörmodule 20 sind Varistoren R1, R2 und R3. In Reihe mit einem Entstörelemente 21 ist jeweils eine Sicherung F1, F2 und F3 angeordnet. Ein Leitungszweig aus Varistor R1, R2 oder R3 und einer in Reihe zum Varistor R1, R2 oder R3 liegenden Sicherung F1, F2 oder F3 liegt jeweils parallel zum Verbraucher V1, V2 oder V3, so wie in Fig. 3 dargestellt. Bei Auslösen einer Sicherung F1, F2 oder F3 wird der zum Verbraucher V1, V2 oder V3 parallel liegende Leitungszweig aus dem Entstörelement 21 und der Sicherung F1, F2 oder F3 unterbrochen.

Die jeweils parallel zu den Verbrauchern V1, V2 und V3 liegenden Reihenschaltungen aus einem Entstörelement 21 (Varistor R1, R2 oder R3) und jeweils einer Sicherung F1, F2 oder F3 bilden auf einer ersten Anschlussseite einen ersten, gemeinsamen Sternpunkt 30. Die elektrischen Potenziale nach den Sicherungen F1, F2 und F3 werden über Knotenpunkte 32, 33 und 34 und Widerstände R10, R11 und R12 insbesondere in der Signaleinheit 10 zu einem zweiten Sternpunkt 40 zusammengeführt. Alternativ kann der Sternpunkt 40 auch durch andere Bauteile oder Bauteilkombinationen insbesondere mit Kondensatoren gebildet werden. Bei ordnungsgemäß arbeitender Schaltung und symmetrischen Netz ist das Potenzial aufgrund der Phasenverschiebung der einzelnen Phasen L1, L2 und L3 am Sternpunkt 40 "Null". Entsprechend ist das Potenzial am ersten Sternpunkt 30 ebenfalls "Null". Wesentlich ist, dass die Potenziale der Sternpunkte 30 und 40 im Normalbetrieb, bedingt durch die Symmetrie der ungestörten Schaltung, gleich sind. Die Signaleinheit 10 wertet eine auftretende Potenzialdifferenz zwischen den Sternpunkten 30 und 40 aus. In einer einfachen Ausführungsform ist vorgesehen, die Standpunkte 30 und 40 über eine LED D1 miteinander zu verbinden. Die Anzeige A in Form der LED D1 wird immer dann aufleuchten, wenn zwischen den Sternpunkten 30 und 40 ein Potenzialunterschied auftritt. Dieses ist der Fall, wenn die Symmetrie der Entstörelemente 21 nicht mehr gegeben ist. Die vorgesehene LED D1 spricht insbesondere in beiden Flussrichtungen an.

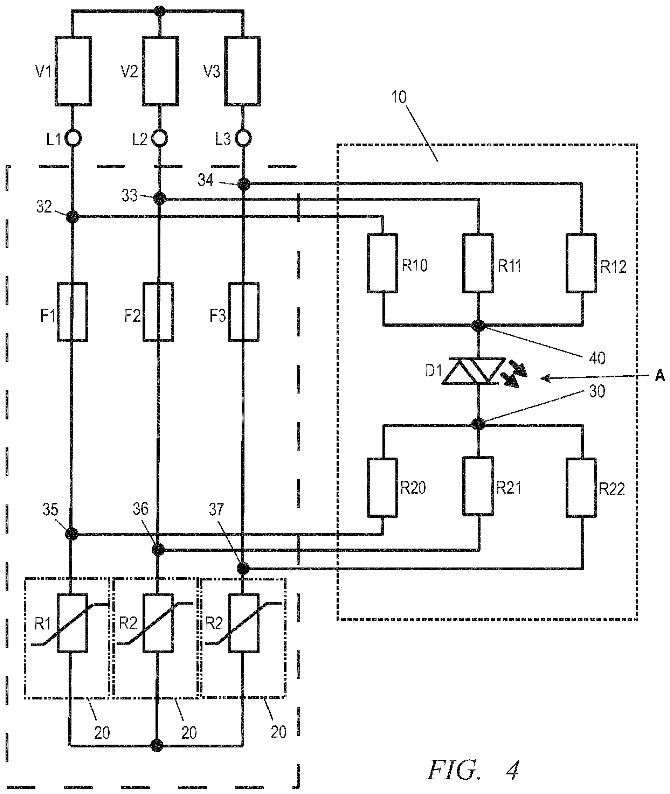

Das Ausführungsbeispiel nach Fig. 4 entspricht im schematischen Aufbau dem nach Fig. 3. Auch hier ist über die Knotenpunkte 32, 33 und 34 in den Phasen L1, L2 und L3 und Widerstände R10, R11 und R12 ein zweiter Sternpunkt 40 gebildet. Vorteilhaft liegen die Widerstände R10, R11 und R12 und der über sie gebildete Sternpunkt 40 in der Signaleinheit 10.

Im Unterschied zum schematischen Schaltbild nach Fig. 3 wird der erste Sternpunkt 30 über Knotenpunkte 35, 36 und 37 und Widerstände R20, R21 und R22 gebildet, die gemeinsam auf den Sternpunkt 30 geschaltet sind. Vorteilhaft liegen die Widerstände R20, R21 und R22 und der über sie gebildete Sternpunkt 30 in der Signaleinheit 10. Alternativ kann der Sternpunkt 30 bzw. 40 auch durch andere Bauteile oder Bauteilkombinationen, insbesondere mit Kondensatoren, gebildet werden.

Die Signaleinheit 10 vergleicht die Potenziale der Sternpunkte 30 und 40 miteinander. Ergibt sich ein Potenzialunterschied, wird die Anzeige A aktiviert. In einfacher Ausführungsform sind die Sternpunkte 30 und 40 über eine LED D1 miteinander verbunden. Die LED ist insbesondere in beide Flussrichtungen leitend, sodass die Anzeige A sowohl bei einem negativen als auch bei einem positiven Potenzialunterschied aufleuchtet. Die Anzeige A kann eine optische und/oder akustische Anzeige und/oder als Meldekotakt ausgeführt sein.

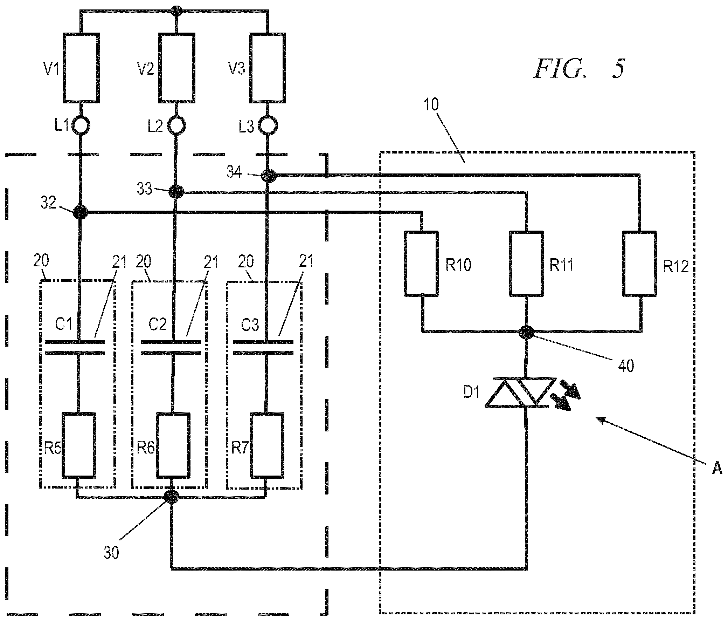

Das schematische Schaltbild nach Fig. 5 entspricht im Grundaufbau dem nach Fig. 3. Für gleiche Bauteile sind gleiche Bezugszeichen verwendet.

Während in Fig. 3 das Entstörelement 21 aus einem Varistor R1 besteht, umfasst in Fig. 5 das Entstörelement 21 einen Kondensator C1. In Reihe zum Kondensator C1 liegt ein Widerstand R5, wodurch ein RC-Glied gebildet ist. Die Reihenschaltung des RC-Gliedes liegt parallel zum Verbraucher V1 der Phase L1. Entsprechend liegt ein RC-Glied aus Kondensator C2 und Widerstand R6 parallel zum Verbraucher V2 und ein RC-Glied aus Kondensator C3 und Widerstand R7 parallel zum Verbraucher V3.

Die RC-Glieder liegen an einem gemeinsamen Sternpunkt 30. Über Knotenpunkte 32, 33 und 34 und Widerstände R10, R11 und R12 ist - bevorzugt in der Signaleinheit 10 - ein gemeinsamer Sternpunkt 40 gebildet, der auch als virtueller Sternpunkt 40 bezeichnet werden kann. Zur Anzeige auftretender Potenzialunterschiede zwischen den Sternpunkten 30 und 40 sind diese in einer einfachen Ausführungsform über eine LED D1 miteinander, insbesondere unmittelbar verbunden. Die LED D1 ist in beiden Flussrichtungen leitend, sodass sowohl negative als auch positive Potenzialunterschiede angezeigt werden.

Die zur Bildung eines Sternpunktes 30 bzw. 40 zwischen einem Knotenpunkt 32, 33 oder 34 bzw. 35, 36 oder 37 und dem Sternpunkt 30 bzw. 40 angeordneten Widerstände R10, R11, R12 bzw. R20, R21 im R22 sind bevorzugt als komplexe Widerstände ausgebildet. Der komplexe Widerstand kann aus einer Kombination aus zumindest einem ohmschen Anteil und/oder zumindest einem kapazitiven Anteil und/oder zumindest einem induktiven Anteil ausgebildet sein.

Die gezeigten Ausführungsbeispiele zeigen den Einbau eines Entstörmoduls parallel zu einem Verbraucher in einem Leitungsnetz. Das Leitungsnetz kann ein AC-Leitungsnetz als auch ein DC Leitungsnetz sein.

## Patentansprüche

1. Entstörmodul in einem Leitungsnetz, umfassend ein Entstörelement (21) und eine Anzeige (A) für einen Ausfall des Entstörelements (21), wobei das Entstörelement (21) parallel zu einem Verbraucher (V1, V2, V3) in zumindest einer Phase (L1, L2, L3) des Leitungsnetzes angeordnet ist, und das Entstörelement (21) ausgebildet ist zur Gewährleistung der elektromagnetischen Verträglichkeit bei Schaltvorgängen des Verbrauchers (V1, V2, V3), insbesondere von Schaltgeräten, Ventilen, Motoren oder dgl. Baueinheiten,
**gekennzeichnet durch** eine Signaleinheit (10), die ausgebildet ist, bei einem anhaltenden Spannungsabfall an einem Bauteil des Entstörmoduls (20) die Anzeige (A) zu aktivieren und einen Ausfall des Entstörelements (21) anzuzeigen.

2. Entstörmodul nach Anspruch 1,
**dadurch gekennzeichnet, dass** die Signaleinheit (10) die Anzeige (A) aktiviert, wenn der Spannungsabfall einen vorgegebenen Grenzwert überschreitet und/oder für eine vorgegebene Zeitspanne anhält.

3. Entstörmodul nach Anspruch 2,
**dadurch gekennzeichnet, dass** die Zeitspanne größer als 0 ms, vorteilhaft größer als 2 ms bis 50 ms, vorzugsweise größer als 5 ms bis 30 ms, insbesondere 10 ms bis 25 ms, ganz insbesondere 20 ms ist.

4. Entstörmodul nach einem der vorhergehenden Ansprüche,
**dadurch gekennzeichnet, dass** das Entstörmodul (20) das Entstörelement (21) und einen Widerstand (R5) umfasst, und die Signaleinheit (10) ausgebildet ist, die über den Widerstand (R5) abfallende Spannung (U1) auszuwerten und in Abhängigkeit der abfallenden Spannung (U1) die Signaleinheit (10) zu aktivieren.

5. Entstörmodul nach einem der vorhergehenden Ansprüche,
**dadurch gekennzeichnet, dass** das Leitungsnetz ein dreiphasiges Leitungsnetz ist, dass an jeder Phase (L1, L2, L3) des Leitungsnetzes ein Entstörelement (21) angeordnet ist, dass die Entstörelemente (21) in einem ersten Sternpunkt (30) zusammengeführt sind, und dass insbesondere in der Signaleinheit (10) ein zweiter Sternpunkt (40) ausgebildet ist, wobei die Signaleinheit (10) dazu ausgebildet ist, das Potenzial des ersten Sternpunktes (30) und das Potenzial des zweiten Sternpunktes (40) miteinander zu vergleichen und bei voneinander abweichenden Potenzialen die Signaleinheit (10) zu aktivieren.

6. Entstörmodul nach Anspruch 5,
**dadurch gekennzeichnet, dass** die Sternpunkte (30, 40) elektrisch über eine insbesondere in beiden Richtungen eines Stromflusses durchlässige LED (D1) verbunden sind.

7. Entstörmodul nach Anspruch 5 oder 6,
**dadurch gekennzeichnet, dass** ein Entstörelement (21) einer Phase (L1, L2, L3), vorzugsweise zwei Entstörelemente (21), besonders bevorzugt jedes Entstörelement (21) einer Phase (L1, L2, L3) in Reihe mit einer Sicherung (F1, F2, F3) geschaltet ist.

8. Entstörmodul nach Anspruch 7,
**dadurch gekennzeichnet, dass** der erste Sternpunkt (30) vor der Reihenschaltung aus Entstörelement (21) und Sicherung (F1, F2, F3) abgeleitet ist, und der zweite Sternpunkt (40) nach der Reihenschaltung aus Entstörelement (21) und Sicherung (F1, F2, F3) abgeleitet ist.

9. Entstörmodul nach Anspruch 7,
**dadurch gekennzeichnet, dass** der erste Sternpunkt (30) zwischen dem Entstörelement (21) und der Sicherung (F1, F2, F3) abgeleitet ist und der zweite Sternpunkt (40) nach der Reihenschaltung aus Entstörelement (21) und Sicherung (F1, F2, F3) abgeleitet ist.

10. Entstörmodul nach einem der vorhergehenden Ansprüche,
**dadurch gekennzeichnet, dass** das Entstörelement (21) ein Varistor ist.

11. Entstörmodul nach einem der vorhergehenden Ansprüche,
**dadurch gekennzeichnet, dass** das Entstörelement (21) ein RC-Glied aus einem Kondensator (C1, C2, C3) und einem Widerstand (R5, R6, R7) ist.

12. Entstörmodul nach einem Anspruch 11,
**dadurch gekennzeichnet, dass** der erste Sternpunkt (30) vor dem RC-Glied abgeleitet ist und der zweite Sternpunkt (40) nach dem RC-Glied abgeleitet ist.

13. Entstörmodul nach einem der vorhergehenden Ansprüche,
**dadurch gekennzeichnet, dass** die Anzeige (A) der Signaleinheit (10) von einer LED (D1) gebildet ist.

14. Entstörmodul nach einem der vorhergehenden Ansprüche,
**dadurch gekennzeichnet, dass** mindestens einer der Widerstände (R10, R11, R12, R20, R21, R22) der Signaleinheit (10) als komplexer Widerstand ausgebildet ist, und der komplexe Widerstand aus einer Kombination aus zumindest einem ohmschen Anteil und/oder zumindest einem kapazitiven Anteil und/oder zumindest einen induktiven Anteil ausgebildet ist.

15. Entstörmodul nach einem der vorhergehenden Ansprüche,
**dadurch gekennzeichnet, dass** das Leitungsnetz ein AC-Leitungsnetz ist.
